# EUROPEAN PATENT SPECIFICATION

(11) **EP 3 802 325 B1**
(45) Date of publication and mention of the grant of the patent: **26.02.2025**
(21) Application number: 19732263.9
(22) Date of filing: 29.05.2019
(51) Int. Cl.: B64F 1/00, B64F 1/305

(54) **METHOD FOR AUTOMATED DOCKING A PASSENGER BOARDING BRIDGE TO AN AIRCRAFT**
VERFAHREN ZUM AUTOMATISCHEN ANDOCKEN EINER FLUGGASTBRÜCKE AN EIN FLUGZEUG
PROCÉDÉ D'ARRIMAGE AUTOMATISÉ D'UNE PASSERELLE D'EMBARQUEMENT DE PASSAGERS À UN AÉRONEF

(30) Priority: 30.05.2018 EP 18382372; 11.07.2018 DE 102018211492
(43) Date of publication of application: 14.04.2021
(60) Divisional application: 25152205.8
(73) Proprietor: TK Airport Solutions, S.A., 33682 Mieres (Asturias) (ES); TK Escalator Norte, S.A., 33682 Mieres (ES)
(72) Inventor: CASADO MERINO, Juan Maria, 15707 Santiago de compostela (ES); MURIAS BERMEJO, Antonio, 33212 Gijón; Asturias (ES); FLÓREZ CASTRO, Alberto, 33690 Lugo de Llanera, Asturias (ES); SABA, Isaak Modaser, 40629 Düsseldorf (DE); PÉREZ PÉREZ, Marcos, 33012 Oviedo (ES); ÁLVAREZ CUERVO, Adrián, 33402 Avilés (ES); MENDIOLAGOITIA JULIANA, José, 33203 Gijón (ES); SESMA SANCHEZ, Francisco Javier, 33204 Gijón (ES); GONZALEZ MIERES, Isabel, 33204 Gijón (ES)
(74) Representative: Jacobi, Nicolas
(86) International application number: PCT/EP2019/063906
(87) International publication number: WO 2019/229105

(56) References cited:
- WO-A1-2018/034615
- US-A1- 2003 120 358
- US-A1- 2007 214 585
- US-A1- 2008 098 538

## Description

The invention refers to a method for automated docking a passenger boarding bridge to an aircraft.

Nowadays the docking of the passenger boarding bridge (PBB) to an aircraft is performed manually. An operator is using a joystick, giving immediate operation signals to the drive means. This kind of docking is time consuming and requires an operator. In case the operator is still busy at another PBB, the docking is delayed, which leads to costly delays in ground handling of aircrafts. Consequently, the market requires a possibility of automatic docking, in which no fully trained and certified operator is needed through the complete docking procedure anymore.

A camera based automatic docking is disclosed in WO 2017/198605 A1. To detect a door contour, a line of windows is detected. A door contour is searched at a position adjacent to the line of windows. Based on the detected door an automatic movement of the PBB is initiated, to get the PBB in alignment with the door of the aircraft.

Methods for automated docking of a passenger boarding bridge are also disclosed in US 2003/0120358 A1, WO 2018/034615 A1, US 2007/0214585 A1 and US 2008/0098538 A1.

It is an object of the present invention to provide an improved method for automated docking a PBB to an aircraft.

The invention comprises a method according to claim 1 and an arrangement according to claim 17; embodiments are disclosed in the subclaims and the description.

The aircraft having a fuselage and a door, to which door a bridgehead of the passenger boarding bridge is to be aligned. The method comprising the following steps: determining a target position in relation to the door, controlling a movement of the bridgehead based on the determined target position.

In an embodiment the PBB comprises a tunnel to which the bridgehead is connected in a rotatable manner, when vied in top view. The tunnel is located between the bridgehead and a terminal building.

In an embodiment in a first, in particular prepositioning, phase an assumed position of a first accuracy is detected using a first detection technology; in a subsequent phase, in particular after moving the bridgehead into the direction of the assumed position, the target position of a second accuracy is determined by using a second detection technology, which is different from the first technology; wherein the first accuracy is lower than the second accuracy. Here the first technology is in particular used for bringing the PBB into a condition in which the second technology can work properly. In particular a camera based system has a limited field of view; for starting the camera based system the door to be docked must be brought into the field of view.

In particular the second accuracy is equal or better than 5 cm. That means in particular, that the target position is determined with a fault of max. +/- 5 cm.

In particular the first accuracy is worse than 5 cm, in particular worse than 20 cm. That means in particular, that the assumed position may be determined with a fault of more than +/- 5 cm, in particular more than +/- 20 cm.

In an embodiment a type of aircraft is determined. Here e.g. the flight coordination of the airport can be consulted which provides the data type of the aircraft which is expected to arrive at next at the respective PBB. Then a database can be consulted which has information about the door position within each aircraft type and which has information about the parking position of the aircraft at the respective PBB. Both data lead to a rough position of the door to be docked with an accuracy, which is sufficient for the preposition and to start final docking, but not sufficient for the final phase of docking. The database may also comprise an information about which door of a plurality of doors is to be docked and can provide this information to the PBB control.

In an embodiment the stand comprises at least two passenger boarding bridges. The method comprises the step of: automatically selecting one of a plurality of the at least two passenger boarding bridges, allocating the target position to the selected passenger boarding bridge selected out of the at least two passenger boarding bridges for controlling movement of the bridgehead of the selected passenger boarding bridge. In a more particular embodiment there are two passenger boarding bridges selected and to each separate boarding bridge an individual target position is allocating to. The selection can be made in dependency of the centerline of a plurality of centerlines of the single stand on which the aircraft is positioned and/or in dependency of the determined aircraft and/or in dependency of the selected door.

The type of aircraft may be determined by a visual docking guidance system (VDGS), which may be part of a control arrangement to control the bridgehead movement. Here no flight coordination database needs to be consulted; the control arrangement can obtain the aircraft type information in a self-sustaining manner.

In an embodiment the target position is determined via an optical scan of the door. The optical scan may be performed by laser measurement and/or image recognition.

In an embodiment a longitudinal coordinate and a transverse coordinate of the target position is determined by analyzing a scanned door contour and/or a painted contour marking of the door; a height coordinate of the target position is determined by analyzing the position of a scanned u-shaped marking below the door. In particular the scanned u-shaped marking is distinct to the painted contour marking.

In a modeling phase a digital three-dimensional model of the door is determined. In particular the digital three-dimensional model may be created during the docking procedure by scanning the door. Alternatively or in combination thereto the three-dimensional model is determined by retrieving a prestored digital three-dimensional model from a database. The prestored model can be identified with the help of the identified aircraft type as described above.

A combination of both mentioned determining methods can be used to improve the quality of the process. So, in a first substep the digital three-dimensional model can be created by scanning; in the second substep the created digital three-dimensional model can be compared with any prestored door model. If the comparison gives a positive feedback (e.g. the created model conforms to a prestored model) the docking procedure may continue - otherwise a failure mode can be initiated.

It occurs that in a final phase the door is merely partially in the field of view of the main scanning device so that the target position is not located in the field view. That may lead to a situation where the camera based docking is not able to follow the target position. Instead of the target position an auxiliary position, which is in relation to the door, will be monitored by the main scanning device. A spatial relationship between the target position and the auxiliary position is thereby provided by the digital model. With the help of the spatial model it is possible to conclude on the target position by calculating the target position based on the monitored auxiliary position and the spatial relationship.

The aforementioned feature enables kind of freedom when looking for a suitable position of the camera, since there are other requirements which need to be considered. So, the position of the scanning device should be out of reach of the passengers, in particular that a passenger cannot hit the scanning device with his head, the passenger may not damage the device or the passenger may not stumble upon the scanning device. So, on the one hand the scanning device should be located outside of the space, in which the user may be located anytime during boarding. On the other hand the scanning device position should support a best possible field of view, catching the door as far as possible over the entire docking procedure. Further it is preferred that commercially available scanners may be used, such as a stereo camera or a laser scanner.

For supporting the aforementioned requirements, a particular suitable position has been developed. In an embodiment the main camera for detecting the target position is located
- below the roof, in particular the roof section of the canopy, of the bridgehead,
- at a level at least 2.1 meters above the bridgehead floor,
- at least rearward offset of at least 0.5m from the approaching edge;
- in particular between side walls of the bridgehead, in particular also within side walls of the canopy (the canopy is considered as being a part of the cabin enclosure).

With the location of the main camera, the position of the relevant sensors is meant. Any control / or computing device of the camera may be located outside of this area. The term "rearward offset" is to be understood as described in relation to the figures.

In an embodiment in case the step of automated determination of the target position leads to a faulty result, a user interaction is requested. A possible user interaction may be:
Identifying the target position by the user interaction. The user indicates the target position on a screen with a suitable HMI input device, e.g. mouse click on the visualization of the target position at a screen.

Continuing the docking procedure by the operator manually.

The operator does not need to be present at the PBB, moreover the operator can be located at a distant location and may use a remote control to interact with the PBB control unit.

In an embodiment the method comprises the following steps: Establishing a trajectory defining the movement of the bridgehead to align the bridgehead with the target position, the trajectory comprising in particular a path of movement and in particular a course of orientations. Moving the bridgehead along the established trajectory.

The path may comprise a group of coordinates. The orientations indicate the angular orientation of the bridgehead. During automated docking the bridgeheads movement is performed in accordance with the established trajectory.

In an embodiment the method comprises the following steps: during moving, continuing determining the target position and reviewing the trajectory based the continuously detected target position; in particular adapting the trajectory if a deviation from a previously determined target position is determined and/or applying a safety mode if a deviation from a previously determined target position is exceeding a predefined critical value.

So, in principle the target position may be continuously monitored by the scanning device. In contrast to just measuring once it has the advantage to improve the accuracy of the docking procedure. If a trajectory is used, the trajectory is permanently updated, if deviations from in the measurements occur. When a deviation reaches a critical value, a safety mode can be issued; in the safety mode the movement speed can be decreased or the movement can be stopped.

In an embodiment the method comprises the following steps: Observing the apron with respect to an obstacle; detecting the position of the obstacle; assessing the relevance of the obstacle by comparing the position of the obstacle with the trajectory. The position of the obstacle may also comprise a short term position during movement of the obstacle. The comparison may come to the result that a collision between parts of the PBB, in particular the drive, and the obstacle is likely; then the safety mode will be issued. Comparing the position of the obstacle with the trajectory leads to a filtering of the objects, so not all objects detected in the area of the PBB will cause issuance of the safety mode.

In an embodiment that the movement of the bridgehead is controlled in a manner, in particular that the trajectory is established in a manner, that in a subsequent phase of movement, in particular when the door distance (distance between the door and the approaching edge of the bridgehead) reaches a value of 0.5m,
- an approaching edge of the bridgehead is aligned parallel to the door, when viewed in top view, in particular that the orientation is perpendicular to the door, and/or
- the bridgehead has reached its final height position.

That leads to a condition in which the movement of the bridgehead does not have a movement component along the fuselage in x or z direction, resulting in a decreased risk of damage to the fuselage.

In an embodiment the movement of the bridgehead is controlled in a manner, that the movement speed is dependent from a distance between the bridgehead and the door, in particular that the movement speed is decreasing as the distance between the bridgehead and the door is decreasing, and/or
in particular that the movement speed is lower than 0.2 m/s, in particular lower than 0.15 m/s, if the door distance is smaller than 1 m, and/or
in particular that the movement speed is higher than 0.4 m/s if the door distance is larger than 2.5 m.

In an embodiment a calibration step is performed before docking, thereby using a calibration tag located at a fixed location of the bridgehead within the field of view of a camera to be calibrated. Due to the continuous movements and resulting vibrations in a PBB the orientation of the scanning device may change slightly, which may result in inaccurate results. With the help of the calibration step these influences are made obsolete.

In an embodiment after the movement of the bridgehead for aligning the passenger boarding bridge with the target position is finished, a validating step is performed, in the validating step it is checked, whether the bridgehead is aligned properly to the door. Here the quality may be checked and if a sufficient level of quality is not determined, then an operator may be prompted to confirm or disconfirm, that the passenger boarding bridge is properly docked. In particular, there may be performed a visual check between a marking on the bridgehead floor and the door contour; if both are aligned in a predetermined manner, docking was successful.

In an embodiment the aircraft is parked in a MARS stand; the MARS stand having a plurality of separate centerlines associated to one passenger boarding bridge. For determining the target position and/or for detecting the assumed position an information is used, on which of the centerlines of the MARS stand the aircraft is parked. This information may be retrieved from a database and/or a VDGS system. By knowing on which centerline the aircraft is parked, the area where to look for the target position and/or the assumed position is massively reduced. Consequently, the bridgehead can be brought into a proper preposition, which is a good starting position for the camera based docking procedure.

A MARS stand comprises a plurality of separate centerlines associated to one passenger boarding bridge. The centerlines indicate different parking positions for different aircrafts. The term "centerlines associated to one passenger boarding bridge" means: Said passenger boarding bridge can be connected to an aircraft parked on a first one of the centerlines as well as to an aircraft parked on a second one of the centerline. Separate centerline means: The centerlines are a) not parallel or b) parallel but at a distance. The MARS stand may comprise two or more PBBs.

The inventive arrangement, comprising: a Passenger boarding bridge, a control arrangement to control a movement of a bridgehead of the passenger boarding bridge. The control arrangement is configured to control a method according to any of claims 1 to 16.

The invention is explained in more detail by means of the figure, the figures show:
- Fig. 1: a second phase of the automated docking procedure in top view;
- Fig. 2: a third phase of the automated docking procedure in top view;
- Fig. 3: a fourth phase of the automated docking procedure in top view;
- Fig. 4: a section through the illustration of figure 3 along the section line V-V;
- Fig. 5: a section through the illustration of figure 4 along the section line VI-VI;
- Fig. 7: three exemplary embodiments of the door contour of the plane;
- Fig. 8: definitions of coordinates and reference points with respect to the aircraft door;
- Fig. 9: a graphical representation of a three-dimensional door model;
- Fig. 10: the PBB when view in direction of arrow X in fig. 1;
- Fig. 11: diagrams of the trajectory;
- Fig. 12: definitions of the coordinate system;
- Fig. 13: the section of figure 5 showing a calibration tag;
- Fig. 14: a speed profile during docking;
- Fig. 15: the alignment of the door in the open and closed state and the bridgehead;
- Fig. 16: passenger boarding bridges at different parking positions in a MARS stand in top view.

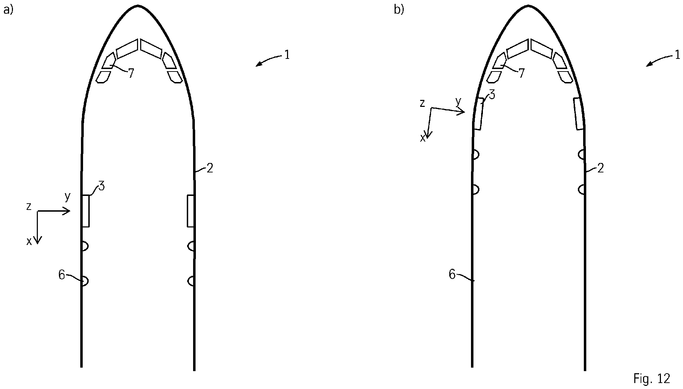

Within the scope of the present application a coordinate system is defined, which is relevant for the docking procedure (figure 12). Therein the direction x indicates the longitudinal direction of the fuselage 2 in the area of the door 3 to be docked. The direction y indicates the transverse direction perpendicular to the fuselage in the area of the door. The difference between figures 12a and 12b indicates, that the x- and y-direction may slightly differ from the airplane coordinate system in particular where the door 3 is located in the nose of the aircraft (figure 12b). The direction z indicates the height direction perpendicular to directions x and y.

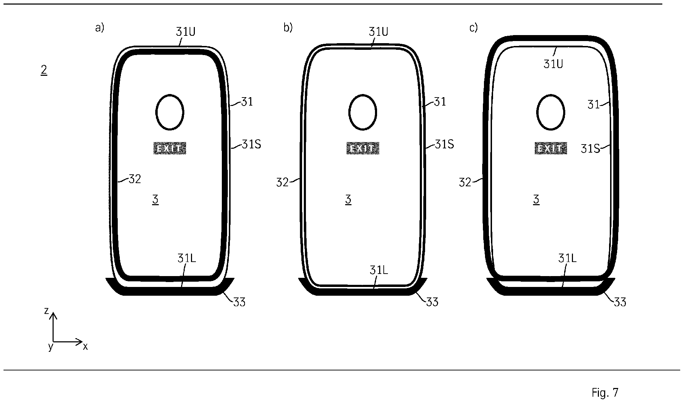

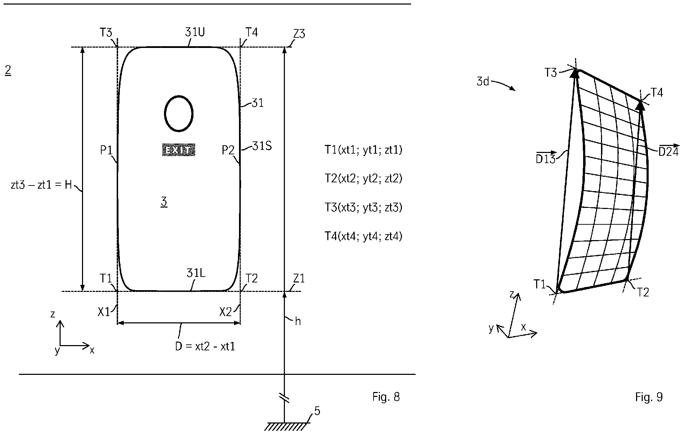

At first reference is made to figures 7 and 8, explaining some basic definitions with are important for the present invention.

Figure 7 shows different configurations of the appearance of an aircraft door 3 within an aircraft fuselage 2. The door 3 is surrounded by a door contour 31, which is characterized by a small gap between the door and the fuselage 2. The door contour 31 comprises four sections, namely the door contour upper 31U, the door contour lower 31L (also: called door sill 31L), and two door contour sides 31S (one on the left side and one of the right side of the door 3).

A ribbon is applied with paint on the fuselage 2 and/or the door 3, which highlights the door contour 31. This ribbon is called painted contour mark (PCM) 32. As the different configurations of figure 7 show, the PCM 32 does not necessarily match exactly with the door contour 31, nevertheless the PCM 32 gives an indication of the door contour shape and position.

For example in the embodiment of figure 7a) the PCM 32 may be painted within the door contour 31, here without touching the door contour 31 at all. In another embodiment as shown in figure 7b, the PCM 32 may be painted on the door contour, so that the door sill is in overlapping condition with the PCM 32. In still another embodiment as shown in figure 7c, the PCM 32 may be painted in the upper area outside of the door contour 31, the lower part of the PCM 32 is painted within the door contour 31. Nevertheless in all embodiments the PCM is intended to highlight the approximate position of the door contour 31. In the longitudinal direction x center of the PCM 32 may be centered to the center of the door sill 31.

In addition to the PCM 32 a u-shaped mark 33 is provided at the lower part of the aircraft door 3. The upper line of the u-shaped mark 33 is collinear with the door sill 31L as shown in all three embodiments of figure 7. The u-shaped marking may be painted to the fuselage or may be a visible protrusion of the fuselage.

It is mandatory for aircraft manufacturers to add the PCM 32 and the u-shaped mark 33; for details are described in technical manuals and the federal US regulation 14 CFR 25.811 - "Emergency exit marking".

Figure 8 shows the door contour 31 without the PCM 32 and the u-shaped marking 33. Herein first and second lower reference points T1, T2 are shown, which may be used as a target position within the present invention. Each lower reference point T1 T2 is in particular
- located on the surface of the fuselage 2;
- is located on a first horizontal plane Z1 in the level of the door sill 31L;
- is located on a first vertical plane X1 or on a second vertical plane X2. Each of the vertical plane X1 and X2 is parallel to the height direction z and the transversal direction y and is aligned with the most forward point P1 (for X1) / most reward point P2 (for X2) (along longitudinal direction x) of the door contour 31.

Respectively there are third and fourth upper reference points T3, T4 shown, which are of interest for the present invention. Each upper reference point T3 T4 in particular
- is located on the surface of the fuselage 2;
- located on a second horizontal plane Z3 in the level of the door contour upper 31U;
- is located on a first vertical plane X1 or on a second vertical plane X2. Each of the vertical plane X1 and X2 is parallel to the height direction z and the transversal direction y and is aligned with the most forward point P1 (for X1) / most reward point P2 (for X2) (along longitudinal direction x).

If possible, the foremost / rearmost point P1, P2 which are used for defining planes X1 and X2, are the foremost / rearmost points of the door contour 31 as shown in figure 8. If the contour 31 itself cannot be extracted clearly it is also sufficient that the most foremost / rearmost points of the PCM 32 are used as the most foremost / rearmost points P1, P2 for defining the planes X1, X2. For detecting the position of the door in longitudinal direction x it is merely important to have positional information which is roughly centered with the door. Each of the reference points Ti has the coordinates xti, yti, zti (for i = 1, 2, 3 or 4).

As can be seen in the different illustrations the PCM in different embodiments the PCM does not match with the door contour 31; however in any case the PCM 32 is sufficiently centered in longitudinal direction with the door contour 31.

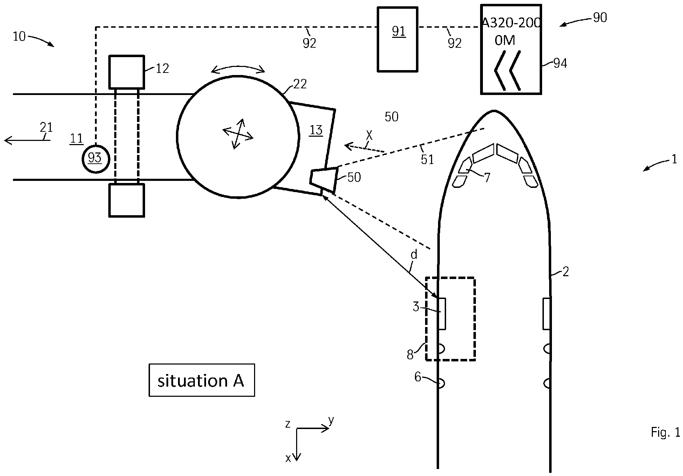

Figure 1 shows an aircraft 1, which is located at a parking position on the apron of an airport. A passenger boarding bridge 10 is positioned in a parking position. In an embodiment the aircraft 1 is detected by a visual docking guidance system (VDGS) 94. The VDGS 94 determines the type of the aircraft 1 and information about the position of the aircraft 1. A suitable VDGS 94 is disclosed in EP 2 660 152 A2, herein called "docking system".

In this example the VDGS 94 recognizes, that the aircraft 1 is an Airbus A320-200, and should be located on a predetermined parking position. In addition in a database 91, in particular connected to the flight control center, information about the type and identification of the next aircraft expected at the gate may be stored. In fact the aircraft parking position will slightly deviate from the exact predetermined parking position, what can be detected by certain types of VDGS 94. The VDGS 94 is connected to the database 91, the database 91 may comprise structural information of the aircraft, in particular the relative position of the door 3 to be docked within the aircraft coordinate system. Based on the available information with respect to the position of the plane 1 at the apron and the relative door position within the aircraft 1 an assumed position 8 of the aircraft door 3 can be calculated. Here the assumed position is an area 8, in which the position of the aircraft door may be located.

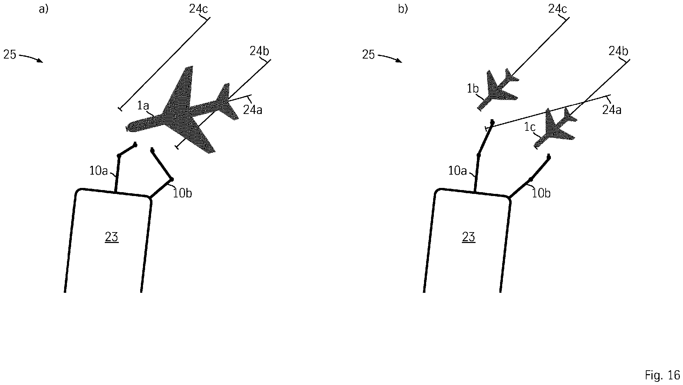

Alternatively or in combination the database 91 may comprise immediate positional information of the assumed door position, if the type and/or identification of the next arriving aircraft is stored, since each aircraft of the same type has to be parked at the same parking position and comprise identical located doors. The database may also comprise individual information of which door is to be docked. This in particular of interest for wide-body aircrafts, which comprise two or more left doors in front of the wings, which may be considered for being docked by a standard (not overwing) PBB. Optional details are described later with reference to figure 16.

The PBB 10 comprises, as usual, a tunnel 11 which is on the one end connected in a conventional manner to a rotunda located at the airport building (not shown). On the other end the PBB comprises a bridgehead 13, which is to be brought into alignment with the aircraft door 3, so that passengers can leave the aircraft 1 via the door 3 and the tunnel 11, in direction 21 to the airport terminal building.

Conventional drive means 12 are provided as to adjust the position of the bridgehead 13 by adapting the length and orientation of the tunnel 11. A conventional lift system (not shown) may be provided to adjust the height position of the bridgehead 13. Additionally the relative angular orientation between the bridgehead 13 and the tunnel 11 can be adapted, since a pivotable joint between the bridgehead 13 and the tunnel 11, in particular a round cabin 22, is provided between the bridgehead 13 and the tunnel 11.

The operation of the drive means 12 is controlled by a control unit 93 of the PBB 10. The control unit 93, the VDGS 94, the database 91 and a data connection 92, connecting the aforementioned components are part of a control arrangement 90.

At the bridgehead 13 a main camera 50 is provided which is used for automatic docking of the bridgehead 13 to the door 3. The main camera 50 has a field of view 51. In situation A the passenger boarding bridge 10 is located in parking position. Here the door 3 is not located in the field of view of the main camera 50. Hence the camera based docking system cannot operate yet. Consequently, at first a prepositioning step has to be performed to bring the main camera 50 into a position, in which the door 3 is in the field of view 51 of the main camera 50.

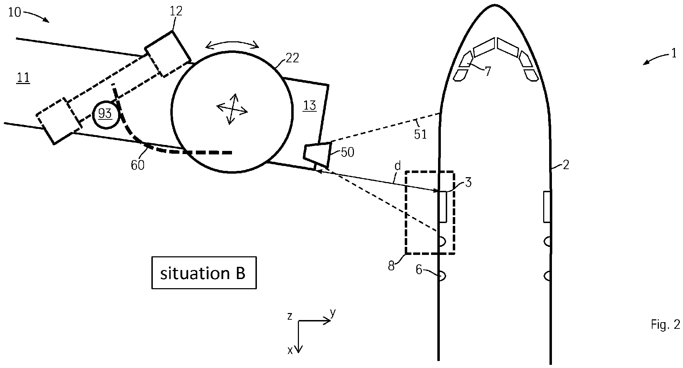

During or before prepositioning a positional information is obtained with the help from the database 91, in particular in combination with the VDGS 94. This positional information is used for determining an assumed position 8 of the door 3. Based on that available information the control unit 93 initiates a first movement of the bridgehead 13 into a condition, where door 3 is in the field of view 51 of the main camera 50 (situation B in figure 2). Now the camera based docking procedure can start. In another embodiment the prepositioning can be obtained manually by an operator.

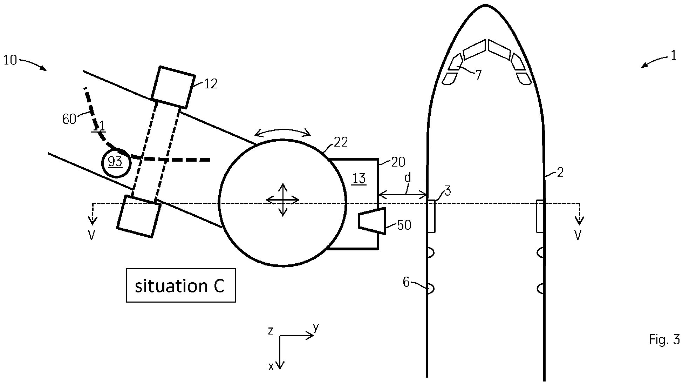

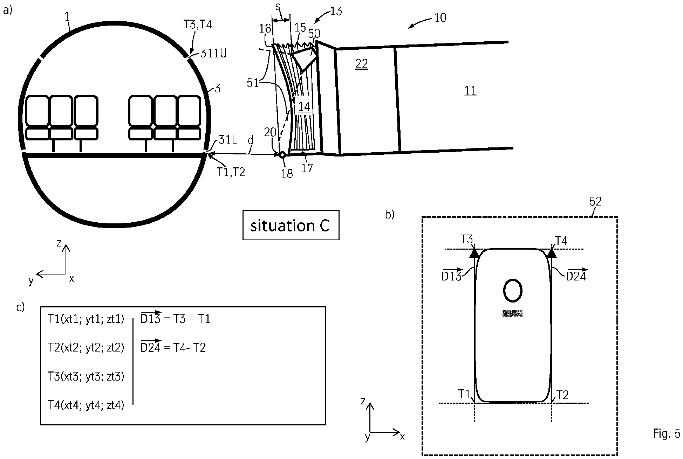

In a subsequent phase B-C, which is the time between situation B (figure 2) and situation C (figure 3), the bridgehead 13 is further moved into the direction of the door 3. Thereby a distance d between an approaching edge 20 of the bridgehead floor 17 (see figure 5a) and the door 3 is reduced. During this phase B-C the approaching edge 20 is still spaced apart from the fuselage 2. During phase B-C the bridgehead 13 is put into an orientation in which the approaching edge 20 is aligned parallel to the door sill 31L.

Figure 5 shows details of situation C. Figure 5a shows a cross-section through aircraft 1 and the PBB 10 along section line V-V in figure 3. In general the approaching edge 20 may be located at a floor bumper 18 on the floor 17 of the bridgehead 13.

For a proper docking it is essential, that the approaching edge 20 is properly aligned in parallel to the door sill 31L. Additionally the approaching edge should be aligned in a predetermined way in the longitudinal direction x; in particular the bridgehead 13 may be centered to the center of door gap 31 or may be aligned slightly offset to the center of the door gap 31 (to enable an opening of the door). A large door may collide with the side wall of the canopy, if the bridgehead is centered exactly. For aligning the bridgehead 13 in the longitudinal direction x the first reference point T1 and the second reference point T2 are used.

Figure 5b shows the picture 52 obtained by the main camera 50 during phase B-C; all four reference points T1, T2, T3, T4 are located within the field of view 51. With the help of the first reference points T1, T2 the door sill 31L can be located. Consequently the approaching edge 20 is to be aligned with the first and second reference points T1, T2 during docking. Consequently the first and second reference points T1, T2 together is considered as a target position T1, T2 for the automatic docking procedure.

During phase B-C the main camera 50 is used for scanning the door 3. A result of that scanning is the creation of a digital three-dimensional model 3d of the door 3, which is shown in figure 9. In this specific embodiment the dimensional door model 3d comprises three-dimensional surface data of the door.

In another embodiment a plurality of models 3d is already prepared and stored in a database 91. Here to each of a plurality of aircraft types an individual door model 3d is allocated. As discussed before, the VDGS 94 may be used for determining the aircraft type or the aircraft type expected may be stored in the database 91. The database 91 may be asked for providing the prestored model 3d associated to the determined aircraft type. "Prestored" means, that the door model 3d is already available in a database before the docking procedure begins and the door model 3d can be retrieved from the database 91 during docking. This may be used for determining the model 3d instead of creating a door model 3d each time during each docking process. Alternatively, a prestored three-dimensional model 31 and a three-dimensional model 3d can be used together to verifying the aircraft type or to improve the quality of a created model 3d.

The obtained coordinates of the reference points T1 - T4 are shown in figure 5c, left column. Already the group of the four coordinates can be considered as a three-dimensional model 3d of the door. With the help of the obtained model a spatial relationship between the obtained reference points can be determined, in particular calculated vectors D13, D24 (see also figure 9) reflect a spatial relationship between third and first reference points T3,T1 / fourth and second reference points T4,T2. Figure 5c, right column, shows these determined spatial relationships, in particular vectors D13, D24, which can also be or can become part of a determined three-dimensional model 3d of the door 3.

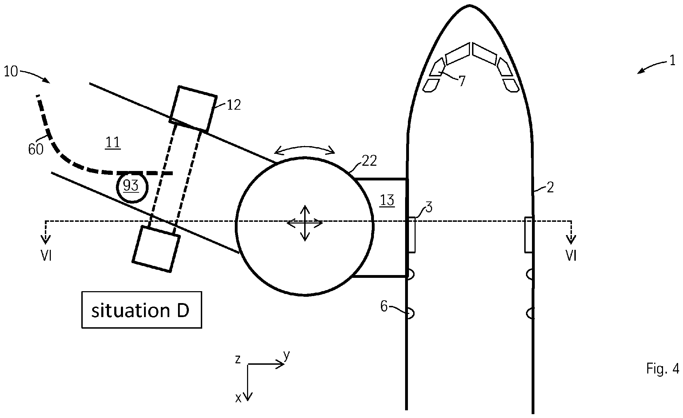

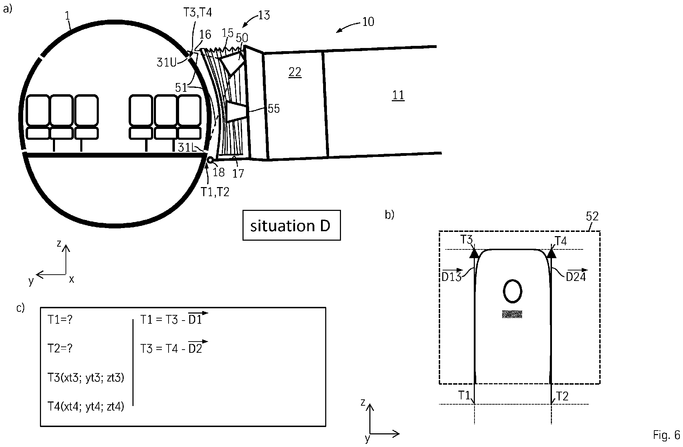

Figure 6 shows details of situation D. Figure 6a shows a cross-section through aircraft 1 and the PBB 10 along section line VI-VI in figure 4. Subsequently during phase C-D (see figures 4 and 6) the bridgehead 13 is further moved in direction of the door 3, thereby maintaining the achieved parallel alignment of situation C until the distance d become smaller than a predetermined maximum gap value, in particular less than 50mm. Figure 6b shows the picture 52 obtained by the main camera during phase D; the lower reference points T1, T2 are not located within the field of view 51 anymore.

The result to be achieved in situation D is to properly align the approaching edge 20 with the door sill 31L. But since the fuselage itself is more and more covering the door sill 31L during at a certain situation in phase C-D it cannot be assured that the lower reference points T1 and T2 or any other point on the door sill 31L can be seen by the a camera reliably. Here situation C1 is a point in time, when reference points T1, T2 get out field of the view 51. Figure 6b shows the picture 52 obtained any time in phase C1-D.

It is to be noted that "properly aligned" does not mean, that the approaching edge is in an exact overlapping condition with the door sill 31L. Rather a proper alignment may require a safety gap between the approaching edge and the fuselage of about 5cm and the floor of the bridgehead should be aligned slightly below the level of the door sill (about 15cm), so that a safety shoe can be placed between the door and the bridgehead floor 17.

During phase B-C1 the upper reference points T3, T4 and the lower reference points T1, T2 are within the field of view 51 of the main camera 50. The main camera 50 is a stereo camera, through which the relative positions of the reference points to the camera position can be calculated. This is done by usual stereoscopic analysis of the obtained pictures using available picture recognition algorithm.

In case the picture recognition algorithm does not provide a valid position of the reference points, the user can be prompted to assist e.g. by mouse clicking on to the illustration of the corners of the door, which are presented to the user on a screen.

Based on that the spatial coordinates (xt1, yt1, zt1), (xt2, yt2, zt2), (xt3, yt3, zt3), (xt4, yt4, zt4) of all four reference points T1, T2, T3, T4 are calculated (see box in figure 5c). The group of the coordinates of these four reference points can be considered as a basic digital three-dimensional model 3d of the door 3. In an advanced embodiment the three-dimensional door model 3d can comprise extensive data representing the surface of the door as shown in figure 9.

Based on the obtained model 3d a differential relationship e.g in form of the vectors D13, D24 can be calculated. The first differential vector D13 constitutes the spatial difference between the third reference point T3 and the first reference point T1. The second differential vector D24 constitutes the spatial difference between the fourth reference point T4 and the second reference point T2.

In phase C1-D (C1 is a situation after situation C and before situation D), the first and second reference points T1, T2 are not visible to the main camera 50. However the third and fourth reference points T3, T4 are still visible and their position can be determined by the main camera. With the help of the model 3d, the coordinates of the first and second reference points T1, T2 can be obtained, in particular by calculating (see right column in box of figure 6c), even if these first and second reference points T1, T2 are not visible to the main camera 50 anymore.

It is an advantageous that the door 3 is as long as possible visible by the main camera 50. Therefore the position of the main camera 50 is an important aspect. It has been found out that for the function of the present application it is advantageous, that the main camera is positioned
- below the roof 19 of the bridgehead 13 (inluding canpoy roof section),
- at a level at least 2.1 meters above the bridgehead floor 17,
- at least offset in rearward direction (see dimensions in figure 5) of at least 0.5m.

This position enables that the door contour upper 31U is visible over the entire docking process at a distance of at least 0.5 meters, which is suitable to calculate the relative of the auxiliary points T3, T4 relative to the main camera 50.

Additionally an auxiliary camera 55 may be used for continuing determining the target position T1, T2 during the phase C1-D, when the target position is not in the field of view of the main camera 50. Exemplary the position of the auxiliary camera 50 is shown in figure 6a. The auxiliary camera 55 is located at a lower height position than main camera 50. Consequently the first and second reference points are in the field of view of the auxiliary camera, even when these points are out of the field of view 51 of the main camera 50. Also the auxiliary camera 55 is in particular protected from any interaction with passengers, which is more likely at this lowered position.

As can be seen in in figure 6a there is likelihood, that the first and second reference points T1, T2 may be covered by the protruding floor bumper 18, in case the PBB is too much elevated. Therefore the position of the auxiliary camera 55 is disadvantageous especially in the early phases B-C of the camera based docking procedure.

However the lowered position of the auxiliary camera 55 position has the increased risk to "loose" the view of the complete door earlier than the upper position of the main camera 50. To have the door as long as possible within the field of view of one single camera increases the scanning results and in particular the creation of the three-dimensional model 3d of the door. Consequently the upper position of camera 50 has advantages although the target position will be lost in the field of view 51. So, a critical distance d, at which the upper main camera 50 loses the parts of the complete door from its field of view is roughly about 1m; a critical distance d, at which the lower auxiliary camera 55 loses the parts of the complete door from its field of view is roughly about 2m. So, for establishing the model 3d, the upper camera is more advantageous.

As long as both cameras can see the target position T1, T2, the auxiliary camera 55 can be calibrated with the scan results of the main camera 50.

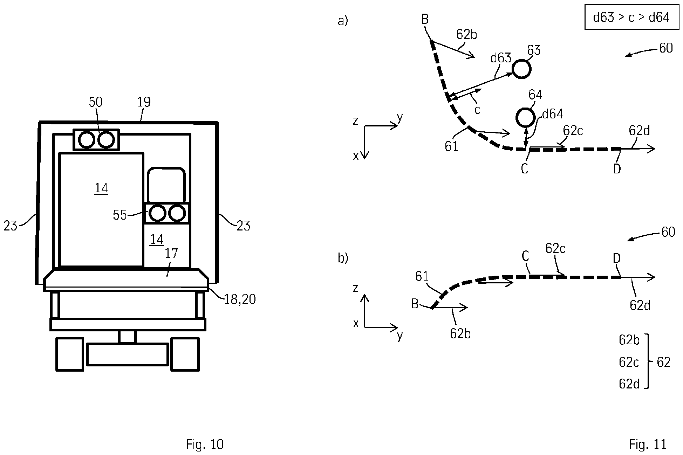

Figure 10 shows the PBB when view from a direction of the door 3 at situation C. The main camera 50 is preferably positioned at a height of at least 2.1m above the floor 18a and below the roof 19 and inside of side wall 23. The auxiliary camera 55 is preferably positioned at a height of at maximum of 1,8m, preferably at maximum of 1.5m, above the floor 18, below the roof 19 and inside of side wall 23.

Figures 2, 3, 4 shows a trajectory 60, which is the basis for the movement of the bridgehead 13. Details of the trajectory are shown in figure 11 (figure 11a is a top view of the trajectory 60, figure 11b is a side view of the trajectory 60). The trajectory 60 comprises a path 61. The path 61 represents a number of positions of a PBB component, which is relevant to the bridgeheads position and passing the trajectory during automatic docking. This positions may be the center of the drive means 12. Here in accordance with the trajectory 60 the bridgehead performs a movement in x, y and z direction, leading from situation B via situation C to situation D, in which the approaching edge 20 is aligned with first and second reference points T1, T2.

The trajectory 60 comprises also a course 62 of orientation 62b-d. Here the orientations 62b-d are vectors defining the direction in which the bridgehead 13 is pointing during the situations B, C and D. In the final docked situation D it is essential, that the approaching edge is oriented in parallel to the door sill 31L. That means that in situation D the vector 62d is perpendicular to fuselage 2 in the area of the door 3. Note, that the fuselage may be curved, what is neglected in this description for keeping the complexity low.

As obvious from figure 11 the trajectory is calculated in a manner, that in situation C the bridgehead as already reached its finals position in height direction z and longitudinal direction x. So, starting from situation C the bridgehead merely performs a movement in y-direction, which is perpendicular to the fuselage 2 in the door area, which reduces risks of damaging the fuselage.

The trajectory 60 can also be used for assessing an obstacle collision between the PBB and an obstacle. Generally, an obstacle may be detected comparing a first image with a second image of any additional camera or another sensor, which can be attached a in the area of the drive 12. The first image may be a prestored image showing the apron area without any obstacle. The second image is an actual image, showing the current situation of the apron. With the help of picture recognition differences between the two images can be determined. Any object, which is present in the second image, but which is not present in the first image, may be considered as an obstacle.

But not all obstacle in the apron present a problem. Within the scope of the invention, only such obstacles may present a problem, which lie in the area of the trajectory.

Figure 11a indicates a plan view of the trajectory 60. Herein the position of first and second obstacles 63, 64 is depicted.

The first obstacle 63 has a plan view distance to the trajectory of d63, which larger than a required minimum clearance distance c. Consequently, first obstacle 63 is not considered as problematic. The second obstacle 64 has a plan view distance to the trajectory of d64, which is smaller than a required minimum clearance distance c. Consequently, second obstacle 64 is considered as problematic. The presence of the second obstacle 64 will induce the control unit to switch into a safety mode. In the safety mode, the movement of the PBB may be stopped or at least a warning signal may be issued. It is possible that there is distinct safety mode, to which different clearance distances are allocated.

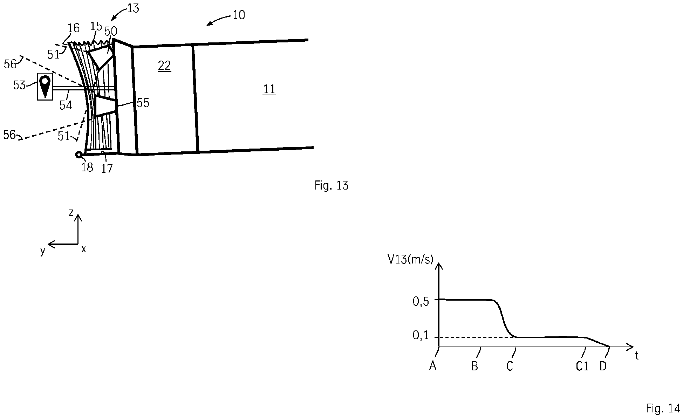

Due to vibrations and/or other environmental influences the calibration status of the camera may be invalid during operation of the bridge. Therefore the system comprises an auto-calibration procedure, which is described with reference to figure 13.

A calibration tag 53 is provided at a defined position within the field of view 51, 56 of the camera to be calibrated, in particular of the main camera 50 and/or of the auxiliary camera 55. The tag 53 may be fixed with a tag fixture 54 to the bridgehead 13. The fixture may be a separate part as shown in figure 13. Alternatively, the floor 17 or a cabin side wall 23 (see figure 10) of the bridgehead 13 can be part of the fixture or may constitute the fixture. E.g. the tag 53 may be painted on the floor 17 or it may be a significant part of the bridgehead 13.

The position of the calibration tag 53 relative to the position of the camera 50, 55 to be calibrated is prestored. So, in a calibration step before docking the camera is calibrated. Hereby the camera performs a step of detecting the relative position of the tag by image recognition. The camera is then calibrated by comparing the detected position with the prestored position.

Figure 14 depicts the speed profile during docking. V13 represent the speed of the bridgehead in plan view, in x- and y-direction. During prepositioning (phase A-B) the speed V13 may be max. 0,5 m/s. During final phase of docking (C-D), in particular when the distance d is smaller than 1 meter, the speed V13 may be max. 0,1 m/s; in particular when the distance is smaller than 0,5 m the speed V13 may be max. 0,05 m/s.

The vertical speed in height direction z (not shown in figure 14) may be reduced to a max of 0,1 m/s during phase A-C. In the final phase of docking (distance d < 1 m) the vertical speed may be reduced to max 0,05 m/s.

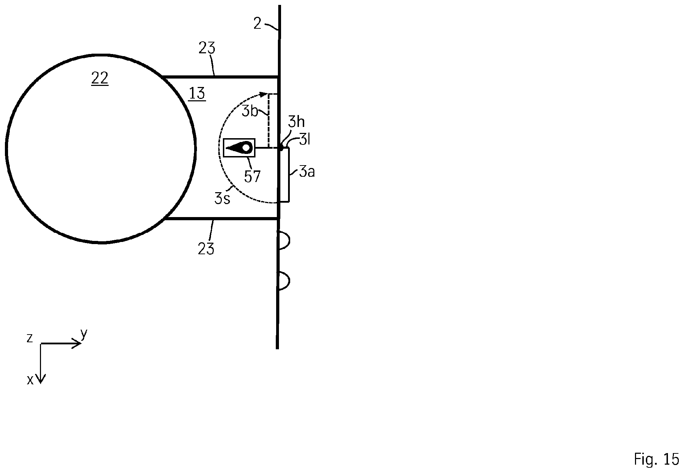

Figure 15 shows the aircraft door in the closed condition (door 3a) and in the open condition (door 3b). In both conditions, the door 3 is overlapping the bridgehead 13 in longitudinal direction x. Since the door is most cases opened not before the docking is completed, a swing range 3s of the door from the closed condition in the open condition is completely in within the side walls 23 the bridgehead 13.

In an embodiment to validate that the bridgehead is properly docked a validation tag 57 is attached provided e.g. at the floor 17 of the bridgehead 13. The validation tag 57 may be an optical mark, which can be detected and located by the main camera 50. The camera checks the alignment in particular in longitudinal direction x between the validation tag 57 and a hinged side 3l of the door 3 (in closed condition). The hinged side 3l of the door 3 is where the door hinge and axis of door swing may be located.

Here the hinge side is the left side, so when viewed from the bridgehead, the door swings to the left side. The hinged side 3l may be optically detected with the help of the contour side 3S or of an area of the PCM marking 32 (see figure 7). For positive validation there may be a tolerance in the alignment between the validation tag 57 and the hinge side 3l of about 20 cm.

The calibration tag 57 and the calibration tag 53 can be the same tag.

Within the scope of the present invention a main camera is described which is enabled to detect e.g. the location of the target. From this formulation is becomes obvious, that the term "camera" is used also for describing a more complex arrangement having, in addition to purely a photo sensor, huge image analyzing capabilities; this camera may be split into separate devices and may comprise a computer.

The invention provides a method which does not require any coding at the fuselage of the aircraft, which contains a coded information about the location of the door, e.g. a QR code or a RFID tag. Thus the invention does not require any preparation performed at the aircraft. Thus any individual aircraft arriving at the PBB can be processed with the inventive method.

Figure 16 shows a gate having a Multiple Apron Ramp System (MARS) stand 25. Here three centerlines 24a-c are provided, which indicate the parking positions for different aircrafts 1a-c. The stand comprises two passenger boarding bridges 10a, 10b, which can connect the aircrafts with a terminal building 23.

Figure 16a shows a docking situation when a first aircraft 1a is to be docked: The first aircraft 1a is a wide body aircraft, e.g. an Airbus A350. Because of the size if a wide body aircraft is located at the stand no other aircraft can be located at said stand at the same time. The two boarding bridges 10a, 10b are shown in a preposition. The first passenger boarding bridge 10a will be docked to the first door, the second passenger boarding bridge 10b will be docked to the second door.

Figure 16b shows another docking situation when a second 1b and a third aircraft 1c is to be docked. Both aircrafts are single aisle aircraft, e.g. an Airbus A320 or smaller, which require less space than the wide body aircraft of figure 9a, so that two of them can be located at the same time at said stand. The two boarding bridges 10a, 10b are shown in their preposition. The first passenger boarding bridge 10a will be docked to aircraft 1b, the second passenger boarding bridge 10b will be docked to aircraft 1c.

In particular the preposition is / the prepositions are a selected from a number of predefined prepositions based on the type of aircraft and/or based on the parking position of the aircraft. During docking the it is determined, on which centerline of the MARS stand the aircraft is parked; based on the determined centerline the target position can be determined in a rough way, in particular by retrieving an appropriate positional information from a database.

The MARS stand comprises two or more PBBs. Before docking it needs to be decided, which of the plurality of PBBS are to be docket. The decision can be made automatically thereby using predefined allocation or selection rules which can considere the type of aircraft to be docked, the specific centerline on which the aircraft is located, and/or a selection of the door which is to be connected by a PBB.

### list of reference signs

- 1: aircraft
- 2: aircraft fuselage
- 3: aircraft door
- 3a: closed door
- 3b: open door
- 3d: door model
- 3l: left side of door
- 3h: door hinge
- 3s: door swing range
- 4: reference points
- 5: apron ground
- 6: side window
- 7: cockpit window
- 8: assumed area of aircraft door
- 10: Passenger boarding bridge
- 11: tunnel
- 12: drive means
- 13: bridgehead
- 14: interior of bridgehead
- 15: canopy
- 16: canopy bumper
- 17: floor
- 18: floor bumper
- 19: cabin roof
- 20: approaching edge
- 21: direction to airport terminal building
- 22: round cabin
- 23: cabin side wall
- 24: centerline
- 25: MARS stand
- 31: door contour
- 31U: door contour upper
- 31L: door contour lower
- 31S: door contour side
- 32: contour mark
- 33: U-shaped mark
- 50: main camera
- 51: field of view of main camera
- 52: picture
- 53: calibration tag
- 54: tag fixture
- 55: auxiliary camera
- 56: field of view of auxiliary camera
- 57: validation tag
- 60: trajectory
- 61: path
- 62: course of orientation
- 62b-d: orientation vector
- 63: first obstacle
- 64: second obstacle
- 90: control arrangement
- 91: database
- 92: data connection
- 93: control unit
- 94: VDGS
- x: longitudinal direction
- y: transverse direction
- z: height dorection
- Z: horizontal plane (within aircraft)
- X: vertical plane (within aircraft)
- T1, T2: target position
- T3,T4: auxiliary position
- s: rearward offset of main camera 50 behind approaching edge
- tx,ty,tz: coordinates of the position of the reference points
- h: height above ground
- d: distance between approaching edge and fuselag
- 31S: door contour side
- 32: contour mark
- 33: U-shaped mark
- 50: main camera
- 51: field of view of main camera
- 52: picture
- 53: calibration tag
- 54: tag fixture
- 55: auxiliary camera
- 56: field of view of auxiliary camera
- 57: validation tag
- 60: trajectory
- 61: path
- 62: course of orientation
- 62b-d: orientation vector
- 63: first obstacle
- 64: second obstacle
- 90: control arrangement
- 91: database
- 92: data connection
- 93: control unit
- 94: VDGS
- x: longitudinal direction
- y: transverse direction
- z: height dorection
- Z: horizontal plane (within aircraft)
- X: vertical plane (within aircraft)
- T1,T2: target position
- T3,T4: auxiliary position
- s: rearward offset of main camera 50 behind approaching edge
- tx,ty,tz: coordinates of the position of the reference points
- h: height above ground
- d: distance between approaching edge and fuselage

## Claims

1. Method for automated docking of a passenger boarding bridge ("PBB") (10) to an aircraft (1),
the aircraft (1) having a fuselage (2) and a door (3), to which door (3) a bridgehead (13) of the passenger boarding bridge (10) is to be aligned,
the method comprising the following steps:
determining a target position (T1, T2) in relation to the door (3),
controlling a movement of the bridgehead (13) based on the determined target position (T1, T2),
**characterized in**
**that** in a modeling phase (B-C) a digital model (3d) of the door (3) is determined,
and in that when in a final phase (C1-D) the door (3) is merely partially in the field of view (51) of a main scanning device (50) so that the target position (T1, T2) is not located in the field view (51),
in the final phase (C1-D) instead of the target position an auxiliary position (T3, T4) in relation of the door (3) is monitored by the main scanning device (50),
wherein a spatial relationship (D13, D24) between the target position (T1, T2) and the auxiliary position (T3, T4) is provided by the digital model (3d),wherein the target position (T1, T2) is calculated from the auxiliary position (T3, T4) and the spatial relationship (D13, D24).

2. Method according to the preceding claim, wherein
in a first, in particular prepositioning, phase (A-B) a assumed position (8) of a first accuracy is detected using a first detection technology;
in a subsequent phase (B-C), in particular after moving the bridgehead (13) into the direction of the assumed position (8), the target position (T1, T2) of a second accuracy is determined by using a second detection technology, which is different from the first technology;
wherein the first accuracy is lower than the second accuracy;
wherein in particular the first technology, comprises the steps of:
determining the type of aircraft (1);
consulting a database (91) for retrieving the assumed position (8) based on the determined aircraft type;
wherein determining the position of the aircraft (1) and/or determining the type of aircraft (1) is performed by means of a docking guidance system (94), in particular a visual docking guidance system (94).

3. Method according to any of the preceding claims, wherein in particular the first technology, comprises the steps of:
selecting one of several doors of the aircraft (1) as the door to be docked, in particular by consulting a database (91).

4. Method according to any of the preceding claims,
wherein the stand comprises at least two passenger boarding bridges (10a, 10b), the method comprises the step of
automatically selecting one of a plurality of the at least two passenger boarding bridges (10a, 10b),
allocating the target position (T1, T2) to the passenger boarding bridge selected out of the at least two passenger boarding bridges (10a. 10b) for controlling movement of the bridgehead of the selected passenger boarding bridge;
in particular selecting two passenger boarding bridges and allocating an individual target position (T1, T2) to each of the two passenger boarding bridges;
in particular the step of selecting the passenger boarding bridge is made in dependency of the selection of the centerline out of a plurality of centerlines on which the aircraft is positioned and/or in dependency of the determined aircraft and/or in dependency of the selected door.

5. Method according to any of the preceding claims,
wherein the target position (T1, T2) is determined via an optical scan of the door (3), in particular a longitudinal coordinate (xt1, xt2) and a transverse coordinate (yt1, yt2) is determined by analyzing a scanned door contour (31) and/or a painted contour marking (32) of the door (3),
and a height coordinate (zt1, zt2) is determined by analyzing the position of a scanned u-shaped marking (33) below the door (3),
in particular wherein the scanned u-shaped marking (33) is distinct to the painted contour marking (32).

6. Method according to any of the preceding claims,
wherein the digital model (3d) is created during the docking procedure by scanning the door (3) and/or a prestored digital model (3d) is retrieved from a database (91).

7. Method according to any of the preceding claims,
wherein for determining a target position (T1, T2) the main scanning device (50) is used,
which is located
- below the roof (19) of the bridgehead (13),
- at a level at least 2.1 meters above the bridgehead floor (17),
- at least rearward offset (s) of at least 0.5m from the approaching edge (20);
- in particular between side walls (23) of the bridgehead (13).

8. Method according to any the preceding claims,
wherein in case the step of automated determination of the target position (T1, T2) leads to a faulty result, a user interaction is requested,
subsequently the target position (T1, T2) is identified with the help of a user interaction.

9. Method according to any the preceding claims, wherein the following steps are provided:
- establishing a trajectory (60) defining the movement of the bridgehead (13) to align the bridgehead (13) with the target position (T1, T2), in particular the trajectory (60) comprising a path (61) of movement and in particular a course (62) of orientations (62b-62d) of the bridgehead (13);
- moving the bridgehead (13) along the established trajectory (60).

10. Method according to the preceding claim,
in particular comprising the step of:
- during moving, continuing determining the target position (T1, T2) and reviewing the trajectory (60) based on the continuously detected target position (T1, T2),
- in particular adapting the trajectory (60) if a deviation from a previously determined target position is determined and/or applying a safety mode if a deviation from a previously determined target position (T1, T2) is exceeding a predefined critical value.

11. Method according to claims 8 or 9,
wherein the following steps are provided:
- observing the apron with respect to an obstacle (63, 64);
- detecting the position of the obstacle (63, 64);
- assessing the relevance of the obstacle by comparing the position of the obstacle (63, 64) with the trajectory (61);
- based on the assessed relevance issuing the passenger boarding bridge into a safety mode.

12. Method according to any of the preceding claims,
wherein the movement of the bridgehead (13) is controlled in a manner, in particular that the trajectory (60) is established in a manner, that in a subsequent phase (C-D) of movement, in particular when the door distance (d) reaches a value of 0.5m,
- an approaching edge (20) of the bridgehead (13) is aligned parallel to the door (3), when viewed in top view, in particular the orientation (62c, 62d) is perpendicular to the door (3), and/or
- the bridgehead (13) has reached its final height position (z).

13. Method according to any of the preceding claims,
wherein the movement of the bridgehead (13) is controlled in a manner, in particular that the trajectory (60) is established in a manner, that the movement speed is dependent from a distance (d) between the bridgehead (13) and the door (3),
in particular that the movement speed is decreasing as the distance (d) between the bridgehead (13) and the door (3) is decreasing, and/or
in particular that the movement speed is lower than 0.2 m/s, in particular lower than 0.15 m/s, if the door distance is smaller than 1 m, and/or
in particular that the movement speed is higher than 0.4 m/s if the door distance is larger than 2.5 m.

14. Method according to any of the preceding claims,
wherein the aircraft is parked in a MARS stand (25);
the MARS stand (25) having a plurality of separate centerlines (24a-c) associated to one passenger boarding bridge (10),
wherein for determining the target position (T1, T2) and/or for detecting the assumed position (8) an information is used, on which of the centerlines (24a-c) of the MARS stand (25) the aircraft (1) is parked.

15. Method according to any of the preceding claims, wherein the following step is provided:
performing a calibration step before docking, thereby using a calibration tag (53) located at a fixed location of the bridgehead (13) within the field of view (51, 56) of a camera (50, 55) to be calibrated.

16. Method according to any of the preceding claims,
wherein after the movement of the bridgehead (13) for aligning the passenger boarding bridge (10) with the target position (T1, T2) is finished, a validating step is performed,
in the validating step it is checked, whether the bridgehead (13) is aligned properly to the door (3).

17. Arrangement, comprising
a Passenger boarding bridge (10),
a control arrangement (90) to control a movement of a bridgehead (13) of the passenger boarding bridge (10), the control arrangement comprising a main scanning device (50),
wherein the control arrangement (90) is configured to control a method according to any of the preceding claims.

## Patentansprüche

1. Verfahren zum automatischen Andocken einer Fluggastbrücke ("PBB") (10) an ein Flugzeug (1),
wobei das Flugzeug (1) einen Rumpf (2) und eine Tür (3) aufweist, wobei an der Tür (3) ein Brückenkopf (13) der Fluggastbrücke (10) auszurichten ist,
wobei das Verfahren die folgenden Schritte umfasst:
Bestimmen einer Zielposition (T1, T2) in Bezug zur Tür (3),
Steuern einer Bewegung des Brückenkopfes (13) auf Grundlage der bestimmten Zielposition (T1, T2),
**dadurch gekennzeichnet,**
**dass** in einer Modellierphase (B-C) ein digitales Modell (3d) der Tür (3) bestimmt wird
und **dass** sich die Tür (3) in einer finalen Phase (C1-D) lediglich teilweise im Sichtfeld (51) einer Hauptscanvorrichtung (50) befindet, sodass sich die Zielposition (T1, T2) nicht im Sichtfeld (51) befindet,
**dass** in der abschließenden Phase (C1-D) statt der Zielposition eine Hilfsposition (T3, T4) in Bezug zur Tür (3) von der Hauptscanvorrichtung (50) überwacht wird, wobei ein räumliches Verhältnis (D13, D24) zwischen der Zielposition (T1, T2) und der Hilfsposition (T3, T4) durch das digitale Modell (3d) bereitgestellt wird, wobei die Zielposition (T1, T2) aus der Hilfsposition (T3, T4) und dem räumlichen Verhältnis (D13, D24) berechnet wird.

2. Verfahren nach dem vorstehenden Anspruch,
wobei in einer ersten, insbesondere Vorpositionierungs-, Phase (A-B) eine angenommene Position (8) mit einer ersten Genauigkeit mittels erster Erfassungstechnologie erfasst wird;
wobei in einer anschließenden Phase (B-C), insbesondere nach dem Bewegen des Brückenkopfes (13) in Richtung der angenommenen Position (8), die Zielposition (T1, T2) mit einer zweiten Genauigkeit mittels zweiter Erfassungstechnologie, die sich von der ersten Technologie unterscheidet, bestimmt wird;
wobei die erste Genauigkeit geringer ist als die zweite Genauigkeit,
wobei insbesondere die erste Technologie die folgenden Schritte umfasst:
Bestimmen des Typs des Flugzeugs (1);
Abfragen einer Datenbank (91) zum Abrufen der angenommenen Position (8) auf Grundlage des bestimmten Flugzeugtyps;
wobei das Bestimmen der Position des Flugzeugs (1) und/oder das Bestimmen des Typs des Flugzeugs (1) mittels eines Andockleitsystems (94), insbesondere eines visuellen Andockleitsystems (94), durchgeführt wird.

3. Verfahren nach einem der vorstehenden Ansprüche,
wobei insbesondere die erste Technologie die folgenden Schritte umfasst:
Auswählen einer von mehreren Türen des Flugzeugs (1) als die anzudockende Tür, insbesondere durch Abfragen einer Datenbank (91).

4. Verfahren nach einem der vorstehenden Ansprüche, wobei der Standplatz mindestens zwei Fluggastbrücken (10a, 10b) umfasst,
wobei das Verfahren folgenden Schritt umfasst:
automatisches Auswählen einer von mehreren der mindestens zwei Fluggastbrücken (10a, 10b),
Zuordnen der Zielposition (T1, T2) zu der aus den mindestens zwei Fluggastbrücken (10a, 10b) ausgewählten Fluggastbrücke zum Steuern der Bewegung des Brückenkopfes der ausgewählten Fluggastbrücke;
insbesondere Auswählen von zwei Fluggastbrücken und Zuordnen einer jeweiligen Zielposition (T1, T2) zu jeder der zwei Fluggastbrücken;
wobei insbesondere der Schritt des Auswählens der Fluggastbrücke in Abhängigkeit von der Auswahl der Mittellinie aus mehreren Mittellinien, auf denen das Flugzeug positioniert ist, und/oder in Abhängigkeit von dem bestimmten Flugzeug und/oder in Abhängigkeit von der ausgewählten Tür erfolgt.

5. Verfahren nach einem der vorstehenden Ansprüche,
wobei die Zielposition (T1, T2) über einen optischen Scan der Tür (3) bestimmt wird,
insbesondere eine Längskoordinate (xt1, xt2) und eine Querkoordinate (yt1, yt2) durch Analysieren einer gescannten Türkontur (31) und/oder einer aufgemalten Konturmarkierung (32) der Tür (3) bestimmt wird,
und wobei die Höhenkoordinate (zt1, zt2) durch Analysieren der Position einer gescannten u-förmigen Markierung (33) unter der Tür (3) bestimmt wird,
insbesondere wobei sich die gescannte u-förmige Markierung (33) von der aufgemalten Konturmarkierung (32) unterscheidet.

6. Verfahren nach einem der vorstehenden Ansprüche,
wobei das digitale Modell (3d) während des Andockvorgangs durch Scannen der Tür (3) erzeugt wird und/oder ein gespeichertes digitales Modell (3d) aus einer Datenbank (91) abgerufen wird.

7. Verfahren nach einem der vorstehenden Ansprüche,
wobei die Hauptscanvorrichtung (50) zum Bestimmen einer Zielposition (T1, T2) verwendet wird,
die wie folgt angeordnet ist:
- unter dem Dach (19) des Brückenkopfes (13),
- auf einer Höhe, die mindestens 2,1 Meter über dem Brückenkopfboden (17) liegt,
- mit einem Versatz (s) nach hinten von zumindest 0,5 m von der sich annähernden Kante (20);
- insbesondere zwischen den Seitenwänden (23) des Brückenkopfes (13).

8. Verfahren nach einem der vorstehenden Ansprüche,
wobei, falls der Schritt des automatischen Bestimmens der Zielposition (T1, T2) zu einem fehlerhaften Ergebnis führt, eine Benutzerinteraktion erforderlich ist,
wobei anschließend die Zielposition (T1, T2) mit Hilfe einer Benutzerinteraktion identifiziert wird.

9. Verfahren nach einem der vorstehenden Ansprüche, wobei die folgenden Schritte vorgesehen sind:
- Festlegen einer Trajektorie (60), welche die Bewegung des Brückenkopfes (13) definiert, um den Brückenkopf (13) mit der Zielposition (T1, T2) auszurichten, insbesondere wobei die Trajektorie (60) eine Bewegungsbahn (61) und insbesondere einen Ablauf (62) von Orientierungen (62b-62d) des Brückenkopfes (13) umfasst;
- Bewegen des Brückenkopfes (13) entlang der festgelegten Trajektorie (60).

10. Verfahren nach dem vorstehenden Anspruch, insbesondere folgenden Schritt umfassend:
- beim Bewegen weiteres Bestimmen der Zielposition (T1, T2) und Überprüfen der Trajektorie (60) auf Grundlage der durchgehend erfassten Zielposition (T1, T2),
- insbesondere Anpassen der Trajektorie (60), falls eine Abweichung von einer zuvor bestimmten Zielposition bestimmt wird, und/oder Anwenden eines Sicherheitsmodus, falls eine Abweichung von einer zuvor bestimmten Zielposition (T1, T2) einen vordefinierten kritischen Wert überschreitet.

11. Verfahren nach Anspruch 8 oder 9,
wobei die folgenden Schritte vorgesehen sind:
- Beobachten des Vorfelds bezüglich eines Hindernisses (63, 64);
- Erfassen der Position des Hindernisses (63, 64);
- Einschätzen der Relevanz des Hindernisses durch Vergleichen der Position des Hindernisses (63, 64) mit der Trajektorie (61);
- auf Grundlage der eingeschätzten Relevanz Schalten der Fluggastbrücke in einen Sicherheitsmodus.

12. Verfahren nach einem der vorstehenden Ansprüche,
wobei die Bewegung des Brückenkopfes (13) derart gesteuert wird, insbesondere wobei die Trajektorie (60) derart festgelegt wird, dass in einer anschließenden Bewegungsphase (C-D), insbesondere wenn die Türentfernung (d) einen Wert von 0,5 m erreicht,
- eine sich annähernde Kante (20) des Brückenkopfes (13), in der Draufsicht betrachtet, parallel zur Tür (3) ausgerichtet ist, insbesondere die Orientierung (62c, 62d) senkrecht zur Tür (3) ist, und/oder
- der Brückenkopf (13) seine abschließende Höhenposition (z) erreicht hat.

13. Verfahren nach einem der vorstehenden Ansprüche,
wobei die Bewegung des Brückenkopfes (13) derart gesteuert wird, insbesondere wobei die Trajektorie (60) derart festgelegt wird, dass die Bewegungsgeschwindigkeit von der Entfernung (d) zwischen dem Brückenkopf (13) und der Tür (3) abhängig ist, insbesondere dass die Bewegungsgeschwindigkeit abnimmt, während die Entfernung (d) zwischen dem Brückenkopf (13) und der Tür (3) abnimmt, und/oder
insbesondere, dass die Bewegungsgeschwindigkeit geringer als 0,2 m/s, insbesondere geringer als 0,15 m/s, ist, wenn die Entfernung zur Tür kleiner als 1 m ist, und/oder insbesondere, dass die Bewegungsgeschwindigkeit höher als 0,4 m/s ist, wenn die Entfernung zur Tür größer als 2,5 m ist.

14. Verfahren nach einem der vorstehenden Ansprüche, wobei das Flugzeug an einem MARS-Standplatz (25) geparkt ist;
wobei der MARS-Standplatz (25) mehrere einer Fluggastbrücke (10) zugeordnete getrennte Mittellinien (24a-c) aufweist,
wobei zum Bestimmen der Zielposition (T1, T2) und/oder zum Erfassen der angenommenen Position (8) eine Information verwendet wird, auf welcher der Mittellinien (24a-c) des MARS-Standplatzes (25) das Flugzeug (1) geparkt ist.

15. Verfahren nach einem der vorstehenden Ansprüche, wobei der folgende Schritt vorgesehen ist:
Durchführen eines Kalibrationsschritts vor dem Andocken, wofür ein Kalibrierungsetikett (53) verwendet wird, das sich an einer festen Position am Brückenkopf (13) im Sichtfeld (51, 56) einer zu kalibrierenden Kamera (50, 55) befindet.

16. Verfahren nach einem der vorstehenden Ansprüche,
wobei, nachdem die Bewegung des Brückenkopfes (13) zum Ausrichten der Fluggastbrücke (10) mit der Zielposition (T1, T2) abgeschlossen ist, ein Validierungsschritt durchgeführt wird,
wobei in dem Validierungsschritt geprüft wird, ob der Brückenkopf (13) mit der Tür (3) korrekt ausgerichtet ist.

17. Anordnung, umfassend
eine Fluggastbrücke (10),
eine Steuerungsanordnung (90) zum Steuern einer Bewegung eines Brückenkopfes (13) der Fluggastbrücke (10), wobei die Steuerungsanordnung eine Hauptscanvorrichtung (50) umfasst,
wobei die Steuerungsanordnung (90) dazu ausgelegt ist, ein Verfahren nach einem der vorstehenden Ansprüche zu steuern.

## Revendications

1. Procédé d'accostage automatique d'un aéronef (1) avec une passerelle d'embarquement pour passagers (10), l'aéronef (1) comportant un fuselage (2) et une porte (3), une tête de passerelle (13) de la passerelle d'embarquement pour passagers (10) étant destinée à être alignée avec ladite porte (3),
le procédé comprenant les étapes suivantes :
déterminer une position cible (T1, T2) relativement à la porte (3),
commander un déplacement de la tête de passerelle (13) en fonction de la position cible déterminée (T1, T2),
**caractérisé**
**en ce que**, dans une phase de modélisation (B-C), un modèle numérique (3d) de la porte (3) est défini,
et **en ce que**, lorsque, dans une phase finale (C1-D), la porte (3) n'est que partiellement présente dans le champ de vision (51) d'un dispositif principal de balayage (50) de sorte que la position cible (T1, T2) ne se trouve pas dans le champ de vision (51), dans la phase finale (C1-D), au lieu de la position cible, une position auxiliaire (T3, T4) relativement à la porte (3) est surveillée par le dispositif principal de balayage (50), une relation spatiale (D13, D24) entre la position cible (T1, T2) et la position auxiliaire (T3, T4) étant fournie par le modèle numérique (3d), la position cible (T1, T2) étant calculée à partir de la position auxiliaire (T3, T4) et de la relation spatiale (D13, D24).

2. Procédé selon la revendication précédente, dans lequel
dans une première phase, en particulier de prépositionnement, (A-B) une position présumée (8), présentant un premier degré de précision, est détectée au moyen d'une première technologie de détection ;
dans une phase ultérieure (B-C), en particulier après avoir déplacé la tête de passerelle (13) dans la direction de la position présumée (8), la position cible (T1, T2), présentant un second degré de précision, est déterminée au moyen d'une seconde technologie de détection, qui est différente de la première technologie ;
dans lequel le premier degré de précision est inférieur au second degré de précision ;
dans lequel, en particulier, la première technologie comprend les étapes suivantes :
déterminer le type d'aéronef (1) ;
consulter une base de données (91) pour obtenir la position présumée (8) en fonction du type d'aéronef déterminé ;
dans lequel la détermination de la position de l'aéronef (1) et/ou la détermination du type d'aéronef (1) sont effectuées au moyen d'un système de guidage d'accostage (94), en particulier d'un système de guidage d'accostage visuel (94).

3. Procédé selon l'une quelconque des revendications précédentes, dans lequel, en particulier, la première technologie comprend les étapes suivantes :
choisir l'une d'une pluralité de portes de l'aéronef (1) comme porte d'accostage, en particulier en consultant une base de données (91).

4. Procédé selon l'une quelconque des revendications précédentes, dans lequel le poste comprend au moins deux passerelles d'embarquement pour passagers (10a, 10b), le procédé comprenant l'étape suivante :
sélectionner automatiquement l'une d'une pluralité des au moins deux passerelles d'embarquement pour passagers (10a, 10b),
attribuer la position cible (T1, T2) à la passerelle d'embarquement pour passagers choisie parmi les au moins deux passerelles d'embarquement pour passagers (10a, 10b) pour commander le déplacement de la tête de passerelle de la passerelle d'embarquement pour passagers choisie ;
en particulier, sélectionner deux passerelles d'embarquement pour passagers et attribuer une position cible individuelle (T1, T2) à chacune des deux passerelles d'embarquement pour passagers ;
en particulier, l'étape de sélection de la passerelle d'embarquement pour passagers est exécutée en fonction de la sélection de la ligne d'axe parmi une pluralité de lignes d'axe sur lesquelles l'aéronef est positionné et/ou en fonction de l'aéronef déterminé et/ou en fonction de la porte sélectionnée.

5. Procédé selon l'une quelconque des revendications précédentes, dans lequel la position cible (T1, T2) est déterminée par le biais d'un balayage optique de la porte (3),
en particulier une coordonnée longitudinale (xt1, xt2) et une coordonnée transversale (yt1, yt2) sont déterminées en analysant un contour de porte balayé (31) et/ou un marquage de contour peint (32) de la porte (3),
et une coordonnée de hauteur (zt1, zt2) est déterminée en analysant la position d'un marquage en u balayé (33) sous la porte (3),
en particulier, dans lequel le marquage en u balayé (33) est distinct du marquage de contour peint (32).

6. Procédé selon l'une quelconque des revendications précédentes, dans lequel le modèle numérique (3d) est créé durant la procédure d'accostage en balayant la porte (3) et/ou un modèle numérique (3d) préenregistré est extrait d'une base de données (91).

7. Procédé selon l'une quelconque des revendications précédentes, dans lequel, pour déterminer une position cible (T1, T2), le dispositif principal de balayage (50) est employé, celui-ci étant placé
- sous le toit (19) de la tête de passerelle (13),
- à un niveau au moins 2,1 mètres au-dessus du sol (17) de la tête de passerelle,
- au moins avec un décalage vers l'arrière (s) d'au moins 0,5 m du bord d'approche (20) ;
- en particulier entre des parois latérales (23) de la tête de passerelle (13).

8. Procédé selon l'une quelconque des revendications précédentes, dans lequel, dans un cas dans lequel l'étape de détermination automatique de la position cible (T1, T2) produit un résultat erroné, une interaction de l'utilisateur est sollicitée, puis la position cible (T1, T2) est identifiée à l'aide d'une interaction de l'utilisateur.

9. Procédé selon l'une quelconque des revendications précédentes, dans lequel les étapes suivantes sont incluses :
- établir une trajectoire (60) définissant le déplacement de la tête de passerelle (13) pour aligner la tête de passerelle (13) avec la position cible (T1, T2), en particulier la trajectoire (60) comprenant un chemin (61) de déplacement et en particulier une série (62) d'orientations (62b-62d) de la tête de passerelle (13) ;
- déplacer la tête de passerelle (13) le long de la trajectoire établie (60).

10. Procédé selon la revendication précédente, en particulier comprenant l'étape suivante :
- durant le déplacement, déterminer en continu la position cible (T1, T2) et réviser la trajectoire (60) en fonction de la position cible (T1, T2) détectée en continu,
- en particulier, adapter la trajectoire (60) si un écart est identifié relativement à une position cible déterminée précédemment et/ou appliquer un mode de sécurité si un écart relativement à une position cible (T1, T2) déterminée précédemment dépasse une valeur critique prédéfinie.

11. Procédé selon la revendication 8 ou 9, dans lequel les étapes suivantes sont incluses :
- observer l'aire de trafic par rapport à un obstacle (63, 64) ;
- détecter la position de l'obstacle (63, 64) ;
- évaluer l'importance de l'obstacle en comparant la position de l'obstacle (63, 64) avec la trajectoire (61) ;
- en fonction de l'importance évaluée, mettre la passerelle d'embarquement pour passagers en mode de sécurité.

12. Procédé selon l'une quelconque des revendications précédentes, dans lequel le déplacement de la tête de passerelle (13) est commandé de telle sorte, en particulier, que la trajectoire (60) soit établie de telle sorte, dans une phase ultérieure (C-D) de déplacement, en particulier lorsque la distance à la porte (d) atteint une valeur de 0,5 m,
- qu'un bord d'approche (20) de la tête de passerelle (13) soit aligné parallèlement à la porte (3), selon une vue de dessus, en particulier que l'orientation (62c, 62d) soit perpendiculaire à la porte (3) et/ou
- que la tête de passerelle (13) ait atteint sa position en hauteur finale (z).

13. Procédé selon l'une quelconque des revendications précédentes, dans lequel le déplacement de la tête de passerelle (13) est commandé de telle sorte, en particulier, que la trajectoire (60) soit établie de telle sorte que la vitesse de déplacement dépende d'une distance (d) entre la tête de passerelle (13) et la porte (3),
en particulier, que la vitesse de déplacement diminue à mesure que la distance (d) entre la tête de passerelle (13) et la porte (3) diminue, et/ou
en particulier, que la vitesse de déplacement soit inférieure à 0,2 m/s, en particulier inférieure à 0,15 m/s, si la distance à la porte est inférieure à 1 m, et/ou
en particulier, que la vitesse de déplacement soit supérieure à 0,4 m/s si la distance à la porte est supérieure à 2,5 m.

14. Procédé selon l'une quelconque des revendications précédentes, dans lequel l'aéronef est en stationnement dans un poste de système d'aire de trafic pour aéronefs multiples (25) ;
le poste de système d'aire de trafic pour aéronefs multiples (25) comportant une pluralité de lignes d'axe distinctes (24a-c) associées à une passerelle d'embarquement pour passagers (10),
dans lequel, pour déterminer la position cible (T1, T2) et/ou pour détecter la position présumée (8), une information est utilisée, indiquant la ligne d'axe (24a-c) du poste de système d'aire de trafic pour aéronefs multiples (25) sur laquelle l'aéronef (1) est en stationnement.

15. Procédé selon l'une quelconque des revendications précédentes, dans lequel l'étape suivante est incluse :
exécuter une étape d'étalonnage avant l'accostage, en utilisant un repère d'étalonnage (53) se trouvant à un emplacement fixe de la tête de passerelle (13) dans le champ de vision (51, 56) d'une caméra (50, 55) à étalonner.

16. Procédé selon l'une quelconque des revendications précédentes, dans lequel, une fois que le déplacement de la tête de passerelle (13) pour aligner la passerelle d'embarquement pour passagers (10) avec la position cible (T1, T2) est terminé, une étape de validation est exécutée,
dans l'étape de validation, il est vérifié que la tête de passerelle (13) est correctement alignée avec la porte (3).

17. Système, comprenant :
une passerelle d'embarquement pour passagers (10),
un système de commande (90) pour commander un déplacement d'une tête de passerelle (13) de la passerelle d'embarquement pour passagers (10), le système de commande comprenant un dispositif principal de balayage (50),
dans lequel le système de commande (90) est conçu pour commander un procédé selon l'une quelconque des revendications précédentes.
